# EUROPÄISCHE PATENTSCHRIFT

(11) **EP 3 922 845 B1**
(45) Veröffentlichungstag und Bekanntmachung des Hinweises auf die Patenterteilung: **21.08.2024**
(21) Anmeldenummer: 21177294.2
(22) Anmeldetag: 02.06.2021
(51) Int. Cl.: F03D 13/25

(54) **SCHWIMMFÄHIGES OFFSHORE-BAUWERK UND EIN VERFAHREN ZU SEINER INSTALLATION**
FLOATING OFFSHORE STRUCTURE AND METHOD OF INSTALLATION
OUVRAGE EN MER FLOTTANT ET SON PROCÉDÉ D'INSTALLATION

(30) Priorität: 09.06.2020 DE 102020115334
(43) Veröffentlichungstag der Anmeldung: 15.12.2021
(73) Patentinhaber: Tractebel Overdick GmbH, 20457 Hamburg (DE)
(72) Erfinder: OLTMANN, Klaas, 21217 Seevetal (DE)
(74) Vertreter: Groth, Wieland

(56) Entgegenhaltungen:
- DE-B3- 102013 111 115
- US-A- 3 540 396
- US-A- 3 577 946
- US-A1- 2013 233 231
- US-A1- 2019 141 963

## Beschreibung

Die Erfindung betrifft ein schwimmendes Offshore-Bauwerk nach dem Oberbegriff des Anspruchs 1 sowie ein Verfahren zur Installation des schwimmenden Offshore-Bauwerks.

Aus der EP 3 055 561 B1 ist eine schwimmende Windkraftanlage bekannt, die eine Trageinheit aufweist, die als Halbtaucher mit einer Ballasteinheit und einer Auftriebseinheit ausgebildet ist. Die Windkraftanlage ist mit einem Tragmast fest mit der Trageinheit verbunden.

Aus der EP 2 992 208 B1 ist eine schwimmfähige Windkraftanlage bekannt, wobei eine Auftriebseinheit stabilisierende Säulen mit einem Innenvolumen zur Aufnahme von Ballast aufweist, durch deren unterschiedliche Befüllung ein Krängungswinkel ausgeglichen werden kann. Auch diese Windkraftanlage ist nachteiligerweise relativ empfindlich gegen Kollisionen mit Schiffen,

Die US 7,281,881 B1 offenbart eine schwimmfähige Öl- oder Gasplattform mit drei seitlichen säulenförmigen Auftriebskörpern.

Aus der WO 2014/031009 ist eine Windkraftanlage mit einer Auftriebseinheit bekannt, mit drei seitlichen säulenartig ausgebildeten Ballastierungstanks, die durch ein Gestänge miteinander verbunden sind, auf denen mittig eine Windkraftanlage positioniert ist.

Die FR 3051022 beschreibt eine Windkraftanlage, die auf einem dreibeinigen Sockel zentral montiert ist, von dem nach oben drei zylindrische Auftriebskörper abgehen.

Die EP 2 479 103 A1 betrifft eine Windkraftanlage mit tetraederförmig angeordneten, säulenförmigen Auftriebskörpern, die durch ein bodenseitiges Gestänge miteinander auf Abstand gehalten werden.

In der US 2019/0141963 A1 ist eine schwimmende Offshore-Windkraftanlage offenbart, mit einem Gitterkorb als schwimmenden Fundament.

In der US 3,577,946 ist eine schwimmende Offshore-Plattform offenbart, die mittels Spannseilen am Meeresboden verankert ist.

In der US 201310233231 A1 ist eine schwimmende Windkraftanlage offenbart, mit einem schwimmenden Fundament mit drei Ballastierungstanks.

In der DE 10 2013 111 115 B3 ist eine schwimmende Windkraftanlage offenbart, mit einem schräg gestellten Tragmast, der über zwei Streben abgestützt ist.

In der EP 2 479 101 B1 ist eine schwimmfähige Windkraftanlage mit einem dreieckförmigen Gestängefundament ausgebildet, von dem nach oben drei Ballastierungstanks abgehen. Diese sind wiederum über ein Gestänge mit einem Turm der Windkraftanlage verbunden.

Aus der US 8,893,638 B2 ist eine ähnliche Konstruktion bekannt, bei welcher der Turm einer Windkraftanlage auf einem Sockel steht, von dem zur Meeresoberfläche hin gerichtet drei Ballastierungstanks abgehen.

Aus der EP 1 269 018 B1 ist eine Windkraftanlage mit einem floßartigen Auftriebskörper bekannt.

Die WO 2018/174348A1 offenbart eine schwimmende Windkraftanlage auf einem Auftriebskörper mit seitlichen geneigten Stützen.

In der US 3,577,946 A ist eine unter Zugspannung am Meeresboden verankerte Offshore-Plattform offenbart.

Die US 2003/0168864 A1 betrifft eine schwimmende, mehrere Rotoren aufweisende Windkraftanlage.

In der US 4,834,014 ist ein viele kleine Röhren aufweisendes Auftriebssystem offenbart.

Die vorstehenden Offshore-Bauwerke tragen nachteiligerweise Windkraftanlagen mit einer Nennleistung von nur bis zu 10 MW. Darüber hinaus wären zusätzliche Redundanzen insbesondere bei Schiffskollisionen vorteilhaft.

Aufgabe der vorliegenden Erfindung ist es, ein schwimmendes Offshore-Bauwerk zur Verfügung zu stellen, das die oben genannten Nachteile vermeidet, zumindest verringert, sowie ein Verfahren zur Installation dieses Offshore-Bauwerkes zur Verfügung zu stellen.

Die Aufgabe wird in ihrem ersten Aspekt durch ein eingangs genanntes schwimmendes Offshore-Bauwerk mit den Merkmalen des Anspruchs 1 erfüllt.

Das erfindungsgemäße schwimmende Offshore-Bauwerk umfasst ein Fundament und einen Aufbau. Der Aufbau ist insbesondere als Windkraftanlage ausgebildet, mit einem Turm, einem Maschinenhaus und einem Rotor oder als Umspannwerk ausgebildet. Das Fundament umfasst einen zusammenhängenden Basiskörper mit wenigstens einem Ballastierungstank. Von dem Basiskörper gehen Stützbeine, die zu einem Übergangsstück führen, ab, auf dem der Aufbau, insbesondere die Windkraftanlage, angeordnet ist. Die Stützbeine umfassen zumindest abschnittsweise zumindest zwei nebeneinander verlaufende Stützrohre. Erfindungsgemäß verlaufen die zumindest zwei nebeneinander verlaufenden Stützrohre parallel zueinander. Das Offshore-Bauwerk ist in einer Betriebsposition gewichtsstabil schwimmend ausgebildet.

Die Erfindung macht von der Idee Gebrauch, einen Aufbau auf einem Fundament anzuordnen, wobei das Fundament einen Auftrieb erzeugt, der sowohl das Fundament als auch den Aufbau schwimmfähig auf Lokation hält. Das Fundament umfasst einen Basiskörper mit Ballastierungstanks, die vorzugsweise ganz unten meeresbodenseitig am Fundament angeordnet sind, so dass Stützbeine von dem Basiskörper in Richtung eines Übergangsstücks, auf dem der Aufbau angeordnet ist, abgehen. Die Stützbeine sind zwischen dem Basiskörper und dem Übergangsstück angeordnet. Die sehr tief angeordneten Ballastierungstanks haben auch den Vorteil, dass der Tiefgang des Offshore-Bauwerks bei mit Luft gefüllten Ballastierungstanks sehr gering ist und auf der anderen Seite bei wenigstens einem mit Wasser befüllten Ballastierungstank der Masseschwerpunkt sehr tief ist.

Zum anderen ist dadurch, dass die Stützbeine abschnittsweise durch zwei nebeneinander verlaufende Stützbeinrohre ausgebildet sind, eine Redundanz vorhanden, die auch bei Kollision mit einem Schiff und bei Beschädigung eines der Stützbeinrohre die Stabilität des gesamten Offshore-Bauwerkes gewährleistet.

Gewichtsstabil schwimmend bedeutet hier, dass in der Betriebsposition der Auftriebsschwerpunkt vorzugsweise exakt lotrecht oberhalb des Masseschwerpunktes des schwimmenden Offshore-Bauwerkes angeordnet ist und sich bei Kippbewegungen, insbesondere Kränkungen, des Offshore-Bauwerkes üblicherweise ein aufrichtender Hebelarm ausbildet, der eine Rückstellkraft erzeugt und das Offshore-Bauwerk in die Betriebsposition zurückbewegt.

Das Offshore-Bauwerk ist erfindungsgemäß frei schwimmend ausgebildet. Unter frei schwimmend wird hier verstanden, dass keine Zugspannungs-Verankerungen vorhanden sind, die eine Auf-und Abwärtsbewegung des Offshore-Bauwerks verhindern. Die erfindungsgemäße Plattform kann dem Seegang folgen. Insbesondere wird das Offshore-Bauwerk nicht ständig unter Zugspannung gegen den Meeresboden gezogen. Möglich sind lose Verankerungen, die nur Drift- oder Drehbewegungen des Offshore-Bauwerkes begrenzen oder verhindern können. Die lose Verankerung erzeugt aber außer der Zugspannung, die durch das Gewicht des Verankerungsseiles selbst erzeugt wird, keine zusätzliche Zugspannung durch das Ankerseil zum Meeresboden hin. Auch lose Verankerungen mit zwei, drei oder mehr Ankern und Ankerseilen sind möglich. Frei schwimmend entspricht die Auftriebskraft der Schwerkraft des Offshore-Bauwerks. In der Zugspannungsverankerung entspricht die Auftriebskraft der Schwerkraft zuzüglich der lotrechten Zugspannung durch die gespannten Verankerungsseile.

Erfindungsgemäß verlaufen die zumindest zwei Stützbeinrohre parallel zueinander, es können die zumindest zwei nebeneinander verlaufenden Stützbeinrohre über schräge Verbindungen starr miteinander verbunden sein. Dadurch erhalten die Stützbeine zusätzliche Stabilität, und durch die schräge Anordnung der Verbindungen gegenüber der Längsausrichtung der zumindest zwei Stützbeinrohre vergrößert sich die Wasserflächenlinie beim Absenken des schwimmenden Offshore-Bauwerkes. Plötzliche Sprünge in der Änderung der Wasserflächenlinie können durch die schräge Anordnung der Verbindungsrohre ebenfalls vermieden werden. Die Verbindungen können als Verbindungsrohre ausgebildet sein, die vorzugsweise außen an die Stützbeinrohre montiert sind, vorzugsweise angeschweißt sind.

In anderen Ausführungen können die Stützbeine auch durch drei, vier oder eine noch höhere Anzahl an nebeneinander verlaufenden Rohren ausgebildet sein. Auch diese Rohre verlaufen alle vorzugsweise parallel zueinander. Das gesamte Offshore-Bauwerk weist wenigstens drei dieser Stützbeinpaare bzw. Stützbeinbündel auf, die jeweils von dem Übergangsstück zum Basiskörper hin abgehen und das Übergangsstück fest mit dem Basiskörper verbinden, so dass die Stützbeine jeweils zwischen dem Basiskörper und dem Übergangsstück angeordnet sind.

Unter wenigstens zwei Stützbeinrohren sind zwei, drei oder jede höhere Anzahl zu verstehen.

Vorzugsweise sind alle Abstände zwischen Stützbeinrohren eines Stützbeines kleiner als alle Abstände zwischen Stützbeinrohren verschiedener Stützbeine. Günstigerweise bilden die Stützbeinrohre eines Stützbeines eine Gruppe eng beieinanderliegender Stützbeinrohre aus. Der Abstand wird dabei vorzugsweise in der horizontalen Ebene bestimmt.

In einer Variante der Ausbildung der Stützbeine weist zumindest eines der Stützbeine abschnittsweise einen Hohlkörper auf, von dessen wenigstens einer Seite die wenigstens zwei nebeneinander verlaufenden Stützbeinrohre abgehen. Das Stützbein weist somit bei dieser Ausführungsform entlang seiner Längsrichtung abschnittsweise beispielsweise einen zylinderförmigen oder kubischen Hohlkörper auf, von dessen einer in Längsrichtung angeordneten Stirnseite und möglicherweise auch von seiner anderen gegenüberliegenden in Längsrichtung angeordneten Stirnseite jeweils die wenigstens zwei Stützbeinrohre abgehen. Die Stützbeinrohre können dann zum einen zum Übergangsstück führen und zum anderen zum Basiskörper führen und jeweils mit diesen verbunden sein. Es ist auch denkbar, dass weitere Hohlkörper entlang des Stützbeines vorgesehen sind, wobei zwei Hohlkörper dann mit zwei oder einer höheren Anzahl an Stützbeinrohren miteinander fest verbunden sind und wenigstens zwei Stützbeinrohre mit dem Übergangsstück bzw. mit dem Basiskörper verbunden sind.

Der Basiskörper weist vorzugsweise in einer Draufsicht einen vieleckigen äußeren Umfang auf, an dessen Ecken die Stützbeine montiert sind. Der Basiskörper ist vorzugsweise als Hohlkörper ausgebildet, in dessen Inneren ein Ballastierungstank, vorzugsweise jedoch zwei, drei oder jede höhere Anzahl an Ballastierungstanks vorgesehen sind, die jeweils einzeln über ein Pumpsystem mit Wasser befüllbar sind oder mit Luft befüllbar sind. Der Basiskörper ist vorzugsweise vollständig als Hohlkörper mit Ballastierungstanks ausgebildet, wobei die einzelnen Ballastierungstanks ausschließlich durch Schotten voneinander getrennt sind.

Erfindungsgemäß ist ein Auftriebsschwerpunkt in einer Schwimmposition oberhalb eines Masseschwerpunktes des Offshore-Bauwerkes angeordnet.

Der Hohlkörper kann in einer Draufsicht entlang des äußeren Umfanges dreieckig ausgebildet sein, wobei die Ecken in der Draufsicht durch Vorsprünge verbreitert sind. Die Vorsprünge können in der Draufsicht viereckig, insbesondere rechteckig sein und somit die Spitzen des Dreieckes abstumpfen.

Der Basiskörper ist vorzugsweise als dreieckförmiger Ringreifen ausgebildet mit einem im Wesentlichen gleichbleibenden Innenquerschnitt senkrecht zu seiner Umfangsrichtung, der nur an den Ecken eine andere Querschnittsform aufweist.

Insbesondere kann der Basiskörper in einer Draufsicht vorzugsweise einen zentralen Durchgang aufweisen, der sich über die gesamte Höhe des Basiskörpers erstreckt und es zulässt, dass Meerwasser durch den Durchgang durch den Basiskörper hindurchtritt.

Der Basiskörper ist günstigerweise in seiner gesamten horizontalen Ausdehnung konstant hoch ausgebildet. Vorzugsweise differiert eine maximale Höhe entlang jedes Querschnitts des Basiskörpers lediglich um 50 cm, vorzugsweise 1 m, besonders bevorzugt 2 m.

In einer besonders bevorzugten Ausführungsform des schwimmenden Offshore-Bauwerks geht von jeder Ecke des Basiskörpers wenigstens ein loses Ankerseil ab. Das lose Ankerseil kann als herkömmliches Seil oder als Kette ausgebildet sein. Durch die losen Ankerseile wird das schwimmende Offshore-Bauwerk auf Lokation gehalten, es kann aber dem Seegang folgen.

Besonders bevorzugt sind die Ankerseile an einer gemeinsamen und drehbaren Befestigungsstelle, die am Basiskörper exzentrisch gegenüber einem Turm der Windkraftanlage angeordnet ist, befestigt, wodurch eine Selbstausrichtung Windkraftanlage im Wind ermöglicht wird.

Die Aufgabe wird in ihrem zweiten Aspekt durch ein Verfahren zur Installation eines schwimmenden Offshore-Bauwerks mit den Merkmalen des Anspruchs 12 gelöst.

Das Verfahren eignet sich insbesondere zur Installation einer der oben genannten schwimmenden Offshore-Bauwerke. Umgekehrt kann jedes der oben genannten Offshore-Bauwerke mit einem dieser Verfahren installiert werden.

Erfindungsgemäß wird der wenigstens eine Ballastierungstank zunächst mit Luft gefüllt. Dabei kann der wenigstens eine Ballastierungstank vollständig oder nur teilweise mit Luft gefüllt werden. Das Offshore-Bauwerk wird so in einen hydrostatisch stabilen Zustand gebracht und auf Lokation verbracht. Auf Lokation wird der wenigstens eine Ballastierungstank mit Wasser gefüllt, so dass das Offshore-Bauwerk auf Lokation gewichtsstabil schwimmt. Besonders bevorzugt wird das Offshore-Bauwerk exzentrisch verankert.

Die Erfindung wird anhand eines Ausführungsbeispiels in sechs Figuren beschrieben. Dabei zeigen:
- Fig. 1: eine perspektivische Ansicht einer erfindungsgemäßen Offshore Windenergieanlage mit Fundament,
- Fig. 2: eine seitliche Ansicht der Offshore-Windenergieanlage mit Fundament,
- Fig. 3: das Fundament in einer perspektivischen Ansicht,
- Fig. 4: eine seitliche Ansicht des Fundamentes,
- Fig. 5: eine Ansicht einer Transportposition der Offshore-Windenergieanlage mit dem Fundament,
- Fig. 6: eine Ansicht einer Betriebsposition der Offshore-Windenergieanlage mit dem Fundament,

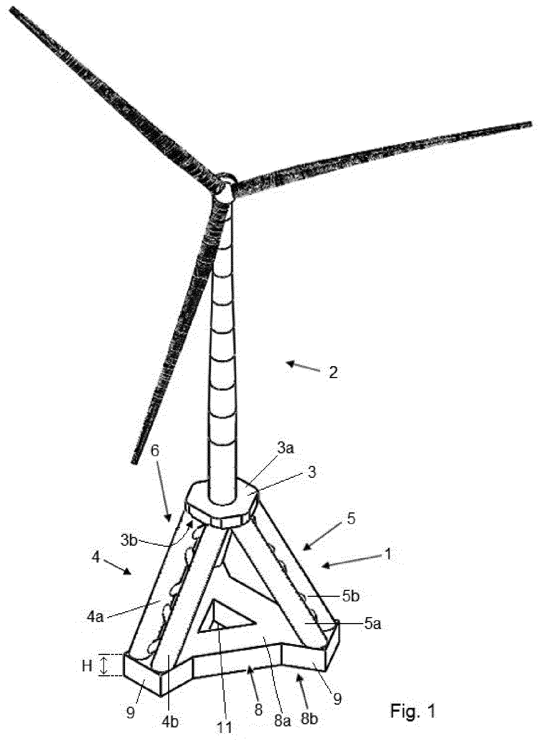

Fig. 1 zeigt ein erfindungsgemäßes schwimmendes Offshore-Bauwerk 11, das ein schwimmendes Fundament 1 und eine Offshore-Windenergieanlage 2 aufweist. Das Fundament 1 umfasst ein Übergangsstück 3, das in Form einer Platte ausgebildet ist mit einer der Windenergieanlage zugewandten, der Meeresoberfläche abgewandten Seite 3a, auf der die Offshore-Windenergieanlage 2 montiert ist sowie einer unteren, der Offshore-Windenergieanlage 2 abgewandten und der Meeresoberfläche zugewandten Seite 3b, an der Paare von Stützrohren 4a, 4b 5a, 5b, 6a, 6b montiert sind. Figur 1 zeigt das Fundament 1 mit drei Stützrohrpaaren 4, 5, 6, die in einem Winkel von 60° gegenüber einer Horizontalen angeordnet sind. Es sind natürlich auch andere Winkelstellungen denkbar. Jedes der Stützrohre 4a, 4b, 5a, 5b, 6a, 6b geht von der Unterseite 3b des Übergangsstücks 3 ab und ein Ende jedes Rohres 4a, 4b, 5a, 5b, 6a, 6b ist mit der Unterseite 3b positionsfest verbunden. Vorzugsweise ist das Übergangsstück 3 aus Beton oder Stahl oder einer Betonarmierung oder einer Mischung der vorgenannten Materialien gefertigt. Die Stützrohre 4a, 4b, 5a, 5b, 6a, 6b sind vorzugsweise aus Stahl gefertigt.

Die Stützrohre 4a, 4b, 5a, 5b, 6a, 6b sind paarweise angeordnet. Die Stützrohrpaare 4, 5, 6 sind parallel zueinander angeordnet. Die Stützrohre 4a, 4b, 5a, 5b, 6a, 6b eines Rohrpaares 4, 5, 6 sind mittels diagonal verlaufender Verbindungsrohre 7 miteinander verbunden. Zum einen erhalten die Stützrohre 4a, 4b, 5a, 5b, 6a, 6b zusätzliche Stabilität. Zum anderen wird die Wasserlinienfläche durch die Verbindungsrohre erhöht. Die Rohrpaare 4, 5, 6 selbst erzeugen eine Redundanz, so dass bei Beschädigungen eines Rohres 4a, 4b, 5a, 5b, 6a, 6b eines Rohrpaares 4, 5, 6, beispielsweise durch Kollision mit einem Schiff, immer noch die Stabilität der Offshore- Windenergieanlage insgesamt gewahrt bleibt, weil das andere Rohr 4a, 4b, 5a, 5b, 6a, 6b des Rohrpaares 4, 5, 6 die Last des defekten Rohres 4a, 4b, 5a, 5b, 6a, 6b mit aufnimmt.

Das Fundament 1 umfasst einen Basiskörper 8. Der Basiskörper 8 enthält wenigstens einen (nicht eingezeichneten) Ballastierungstank, vorzugsweise jedoch eine Vielzahl an (nicht eingezeichneten) Ballastierungstanks, die im Inneren des Basiskörpers 8 angeordnet sind und die durch Schotten voneinander getrennt sind. Jeder Ballastierungstank kann separat mit Wasser befüllt werden oder mit Luft befüllt werden. Es sind dafür Pumpsysteme vorgesehen, die in den Zeichnungen nicht eingezeichnet sind.

Der Basiskörper 8 ist in einer Draufsicht dreieckförmig ausgebildet, wobei die Ecken des Dreieckes durch rechteckige Vorsprünge 9 verbreitert beziehungsweise abgestumpft sind. Es sind natürlich auch andere Ausformungen des Basiskörpers 8 denkbar, beispielsweise viereckige, fünfeckige oder noch höhereckige Basiskörperformen. Der Basiskörper 8 weist in einer Draufsicht einen zentral angeordneten Durchgang 12 auf, der sich über eine gesamte Höhe H des Basiskörpers 8 erstreckt.

Auf einer Oberseite 8a des Basiskörpers 8, die der Meeresoberfläche zugewandt ist beziehungsweise der Windenenergieanlage zugewandt ist, sind andere Enden der Rohre 4a, 4b, 5a, 5b, 6a, 6b jedes Rohrpaares 4, 5, 6 positionsfest montiert.

Die Stützrohre 4a, 4b, 5a, 5b, 6a, 6b sind jeweils im Durchmesser über ihre gesamte Längsausdehnung konstant. Die Stützrohre 4a, 4b, 5a, 5b, 6a, 6b sind auch untereinander gleich.

Das erfindungsgemäße Fundament 1 erzeugt einen Auftrieb, der hinreichend ist, das Fundament 1 sowie wie die darauf montierte Offshore-Windenergieanlage 2 schwimmfähig zu halten.

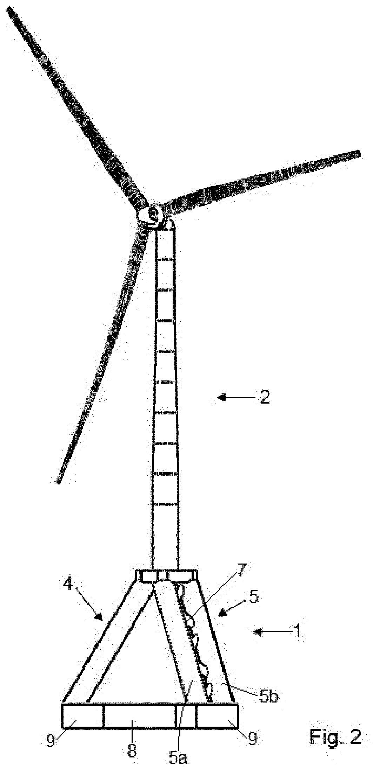

Fig. 2 zeigt die Offshore-Windenergieanlage 2 in Fig. 1 in einer seitlichen Ansicht. Der Basiskörper 8 weist über seine gesamte horizontale Ausdehnung eine gleichbleibende Höhe H auf, wobei natürlich auch andere Ausformungen des Basiskörpers 8 denkbar sind. Bevorzugt ist eine dem Meeresboden zugewandte Unterseite 8b des Basiskörpers 8 flach ausgebildet, damit das Bauwerk zur Montage im Hafen auf dem Meeresboden aufsetzen kann.

Das Übergangsstück 3 ist ebenfalls plattenförmig ausgebildet und weist über seine gesamte horizontale Ausdehnung ebenfalls eine gleichbleibende Höhe H auf.

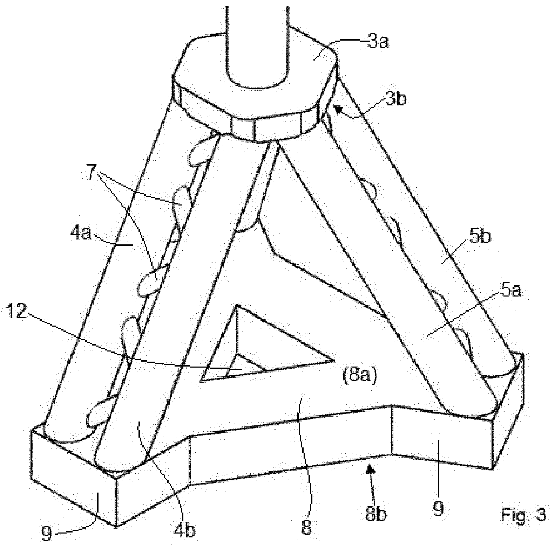

Fig. 3 zeigt das Fundament in einer perspektivischen Ansicht. Deutlicher zu erkennen sind die diagonal, etwa in einem Winkel von 45°, zwischen zwei Stützrohren 4a, 4b, 5a, 5b, 6a, 6b eines Rohrpaares 4, 5, 6 angeordneten Verbindungsrohre 7. Die Verbindungsrohre 7 sind im Durchmesser deutlich kleiner als die Stützrohre 4a, 4b, 5a, 5b, 6a, 6b ausgebildet. Die diagonalen Verbindungsrohre 7 sind außen auf die Außenwand der Stützrohre 4a, 4b, 5a, 5b, 6a, 6b positionsfest montiert. Die Verbindungsrohre 7 können mit dem Stützrohren 4a, 4b, 5a, 5b, 6a, 6b auch luft- bzw. wasserleitend verbunden sein.

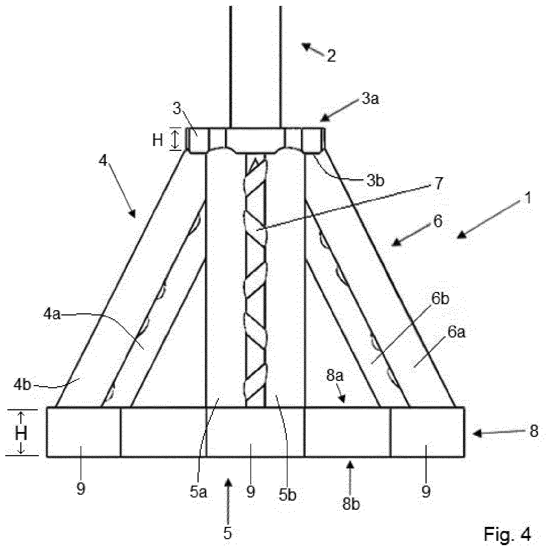

Fig. 4 zeigt das Fundament 1 in einer weiteren seitlichen Ansicht. Deutlich wird, dass die Stützrohre 4a, 4b, 5a, 5b, 6a, 6b entlang eines Außenumfanges des Basiskörpers 8 angeordnet sind und hier fünf diagonale Verbindungsrohre für jedes Stützbeinpaar 4, 5, 6 vorgesehen sind.

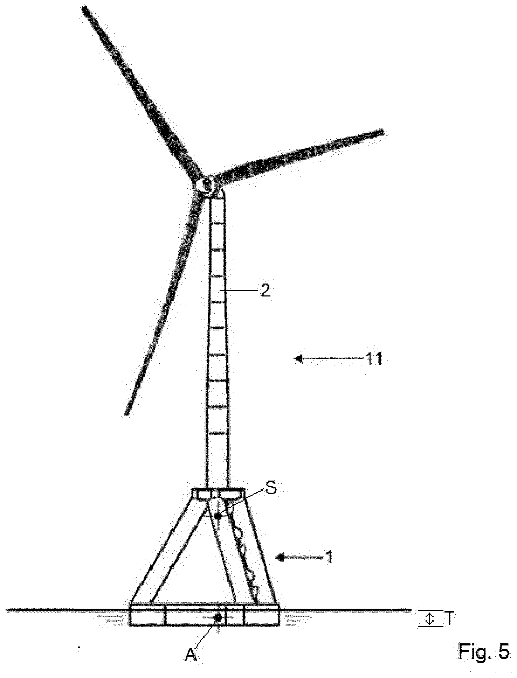

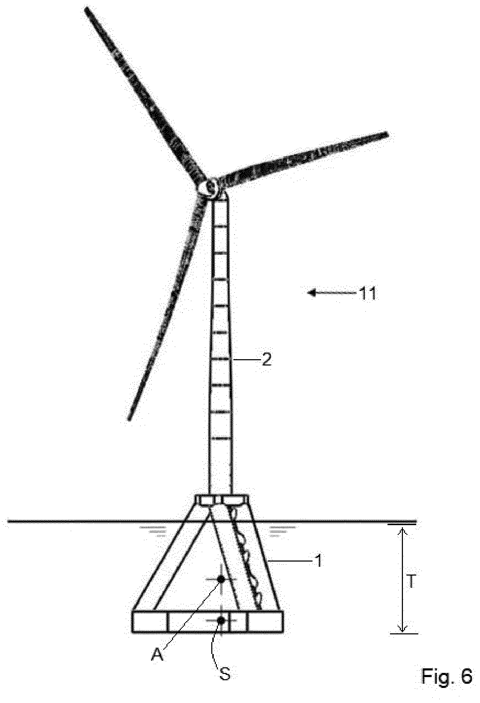

In Fig. 5 ist die Transportposition und in Fig. 6 die Betriebsposition des Offshore-Bauwerks 11 dargestellt. In beiden Positionen schwimmt das Offshore-Bauwerk 11.

In Fig. 5 sind die Ballastierungstanks des Basiskörpers 8 vollständig oder zumindest in größerem Maße mit Luft gefüllt. Dabei werden die Ballastierungstanks soweit mit Luft gefüllt, dass das Fundament 1 einen geringen Tiefgang T hat, um auf diese Weise aus einem Hafen, in dem das Offshore-Bauwerk 11 montiert wurde, herausgeschleppt werden zu können.

Das Offshore-Bauwerk 11 befindet sich in der Transportposition in einem hydrostatisch stabilen Zustand. Der Auftriebsschwerpunkt A des Offshore-Bauwerks 11 befindet sich unterhalb, das heißt dem Meeresboden zugewandt, des Masseschwerpunktes S des Offshore-Bauwerks 11. Nachdem das schwimmende Offshore-Bauwerk 11 mittels Schleppern oder Ähnlichem auf Lokation im Meer oder auf See verbracht wurde, werden die Ballastierungstanks mit Wasser gefüllt. Dabei werden die Ballastierungstanks vorzugsweise mit Wasser gefüllt, so dass die Windenergieanlage 2 möglichst senkrecht während des Absenkens steht. Es sind jedoch auch andere Ballastierungen denkbar, bei der zumindest zeitweise die Windenergieanlage 2 etwas seitlich geneigt ist.

In der Betriebsposition sind die Ballastierungstanks mit Wasser vollständig gefüllt oder zumindest mehr gefüllt als in der Transportposition. Wie in Fig. 6 gezeigt, befindet sich der Masseschwerpunkt S unterhalb des Auftriebsschwerpunktes A und die Offshore-Windenergieanlage 2 befindet sich in einem gewichtsstabilen Zustand. Der Tiefgang T ist deutlich größer als in der Transportposition.

Vorzugsweise sind an den Ecken des Basiskörpers 8 Verankerungsseile beziehungsweise -ketten, angeordnet, die von den Ecken des Basiskörpers 8 abgehen und zu einem Anker, der im Meeresboden verankert ist, führen. Vorzugsweise sind drei Verankerungsseile vorgesehen. Es können jedoch auch pro Ecke zwei oder eine höhere Anzahl an Verankerungsseilen vorgesehen sein. In einer anderen nicht dargestellten Ausführungsform sind die Anker nicht dreieckig möglichst weit voneinander beabstandet in einer Draufsicht kongruent zum Basiskörper im Meeresboden verankert, sondern die Verankerungsseile führen zu einer zentralen Verankerungsstelle im Meeresboden. Dadurch ist es dem Fundament 1 möglich, Drehbewegungen durchzuführen und dem Wind zu folgen. So kann auf eine drehbare Anordnung des Maschinenhauses auf dem Turm der Offshore-Windenergieanlage 2 verzichtet werden.

### Bezugszeichenliste

- 1: Fundament
- 2: Offshore-Windenergieanlage
- 3: Übergangsstück
- 3a: Meeresoberfläche abgewandten Seite
- 3b: Meeresoberfläche zugewandten Seite
- 4: Stützrohrpaar
- 4a: Stützrohr
- 4b: Stützrohr
- 5: Stützrohrpaar
- 5a: Stützrohr
- 5b: Stützrohr
- 6: Stützrohrpaar
- 6a: Stützrohr
- 6b: Stützrohr
- 7: Verbindungsrohre
- 8: Basiskörpers
- 9: Vorsprünge
- 11: Offshore-Bauwerk
- 12: Durchgang
- A: Auftriebsschwerpunkt
- S: Masseschwerpunkt
- T: Tiefgang
- H: Höhe

## Patentansprüche

1. Schwimmendes Offshore-Bauwerk (11) mit einem Aufbau (2) und einem Fundament (1)
mit einem zusammenhängenden Basiskörper (8) mit wenigstens einem Ballastierungstank
und mit von dem Basiskörper abgehenden Stützbeinen (4a, 4b, 5a, 5b, 6a, 6b), die zu einem Übergangsstück (3) führen, auf dem der Aufbau (2) angeordnet ist und das Offshore-Bauwerk (11) in einer Betriebsposition gewichtsstabil schwimmt, wobei in der Betriebsposition ein Masseschwerpunkt (M) unterhalb eines Auftriebsschwerpunktes (A) angeordnet ist, so dass sich bei Kippbewegungen ein aufrichtender Hebelarm ausbildet, der eine Rückstellkraft erzeugt, die das Offshore-Bauwerk in die Betriebsposition zurückbewegt und dass es frei schwimmend ausgebildet ist, **dadurch gekennzeichnet, dass** die Stützbeine (4, 5, 6) zumindest abschnittsweise zumindest zwei parallel nebeneinander verlaufende Stützbeinrohre (4a, 4b, 5a, 5b ,6a, 6b) umfassen.

2. Schwimmendes Offshore-Bauwerk nach Anspruch 1,
**dadurch gekennzeichnet, dass** alle Abstände zwischen Stützbeinrohren (4a, 4b, 5a, 5b, 6a, 6b) eines Stützbeines (4, 5, 6) kleiner sind als alle Abstände zwischen Stützbeinrohren (4a, 4b, 5a, 5b, 6a, 6b) verschiedener Stützbeine (4, 5, 6).

3. Schwimmendes Offshore-Bauwerk nach einem der vorstehenden Ansprüche,
**dadurch gekennzeichnet, dass** wenigstens eines der Stützbeine (4, 5, 6) abschnittsweise einen Hohlkörper aufweist, von dessen wenigstens einer Seite wenigstens zwei nebeneinander verlaufende Stützbeinrohre (4a, 4b, 5a, 5b, 6a, 6b) abgehen.

4. Schwimmendes Offshore-Bauwerk nach einem der vorstehenden Ansprüche,
**dadurch gekennzeichnet, dass** die zumindest zwei nebeneinander verlaufenden Stützbeinrohre (4a, 4b, 5a, 5b, 6a, 6b) über schräge Verbindungen (7) miteinander starr verbunden sind.

5. Schwimmendes Offshore-Bauwerk nach einem der vorstehenden Ansprüche,
**dadurch gekennzeichnet, dass** die Verbindungen (7) als Verbindungsrohre ausgebildet sind.

6. Schwimmendes Offshore-Bauwerk nach einem der vorstehenden Ansprüche,
**dadurch gekennzeichnet, dass** der Basiskörper (8) in einer Draufsicht einen vieleckigen äußeren Umfang aufweist, an dessen Ecken die Stützbeine (4, 5, 6) montiert sind.

7. Schwimmendes Offshore-Bauwerk nach einem der vorstehenden Ansprüche,
**dadurch gekennzeichnet, dass** der Basiskörper (8) in einer Draufsicht entlang des äußeren Umfanges dreieckig ausgebildet ist und die Ecken in der Draufsicht durch Vorsprünge (9) verbreitert sind.

8. Schwimmendes Offshore-Bauwerk nach einem der vorstehenden Ansprüche,
**dadurch gekennzeichnet, dass** der Basiskörper (8) in der Draufsicht einen zentralen Durchgang aufweist.

9. Schwimmendes Offshore-Bauwerk nach einem der vorstehenden Ansprüche,
**dadurch gekennzeichnet, dass** der Aufbau als Windkraftanlage oder Umspannwerk ausgebildet ist.

10. Schwimmendes Offshore-Bauwerk nach einem der vorstehenden Ansprüche,
**dadurch gekennzeichnet, dass** von jeder Ecke ein loses Ankerseil abgeht.

11. Schwimmendes Offshore-Bauwerk nach einem der vorstehenden Ansprüche,
**dadurch gekennzeichnet, dass** die Ankerseile von einer gegenüber einem Turm der Windenergieanlage exzentrisch gelagerten Befestigungsstelle am Basiskörper (8) abgehen und eine Selbstausrichtung des Offshore-Bauwerks (11) im Wind ermöglichen.

12. Verfahren zur Installation eines schwimmenden Offshore-Bauwerks (11) nach einem der vorstehenden Ansprüche,
indem der wenigstens einen Ballastierungstank mit Luft gefüllt wird,
das Offshore-Bauwerk (11) hydrostatisch stabil auf Lokation verbracht wird,
der wenigstens eine Ballastierungstank mit Wasser gefüllt wird und das Offshore-Bauwerk (11) auf Lokation in einer Betriebsposition gewichtsstabil schwimmt.

13. Verfahren nach Anspruch 12,
**dadurch gekennzeichnet, dass** das Offfshore-Bauwerk (11) exzentrisch verankert wird.

## Claims

1. Floating offshore structure (11) with a construction (2) and a foundation (1) with a connected base body (8) with at least one ballast tank
and with support legs (4a, 4b, 5a, 5b, 6a, 6b) extending from the base body, which lead to a transition piece (3) on which the construction (2) is arranged and the offshore structure (11) floats in a weight-stable manner in an operating position, wherein in the operating position a centre of mass (M) is arranged below a centre of buoyancy (A), so that in the event of tilting movements a righting lever arm is formed which generates a restoring force which moves the offshore structure back into the operating position and that it is designed to float freely,
**characterised in that** the support legs (4, 5, 6) comprise at least two support leg pipes (4a, 4b, 5a, 5b, 6a, 6b) extending parallel to one another at least in sections.

2. Floating offshore structure according to claim 1,
**characterised in that** all distances between support leg pipes (4a, 4b, 5a, 5b, 6a, 6b) of one support leg (4, 5, 6) are smaller than all distances between support leg pipes (4a, 4b, 5a, 5b, 6a, 6b) of different support legs (4, 5, 6).

3. Floating offshore structure according to one of the preceding claims,
**characterised in that** at least one of the support legs (4, 5, 6) has a hollow body in sections, from at least one side of which at least two support leg pipes (4a, 4b, 5a, 5b, 6a, 6b) extend side by side.

4. Floating offshore structure according to one of the preceding claims,
**characterised in that** the at least two support leg pipes (4a, 4b, 5a, 5b, 6a, 6b) extending next to each other are rigidly connected to each other via inclined connections (7).

5. Floating offshore structure according to one of the preceding claims,
**characterised in that** the connections (7) are designed as connecting pipes.

6. Floating offshore structure according to one of the preceding claims,
**characterised in that** the base body (8) has a polygonal outer circumference in a top view, at the corners of which the support legs (4, 5, 6) are mounted.

7. Floating offshore structure according to one of the preceding claims,
**characterised in that** the base body (8) is triangular in top view along the outer circumference and the corners are widened in top view by projections (9).

8. Floating offshore structure according to one of the preceding claims,
**characterised in that** the base body (8) has a central passage when viewed from above.

9. Floating offshore structure according to one of the preceding claims,
**characterised in that** the structure is designed as a wind turbine or transformer station.

10. Floating offshore structure according to one of the preceding claims,
**characterised by** the fact that a loose anchor cable extends from each corner.

11. Floating offshore structure according to one of the preceding claims,
**characterised in that** the anchor cables extend from an attachment point on the base body (8) which is mounted eccentrically relative to a tower of the wind turbine and enable the offshore structure (11) to self-align in the wind.

12. Method for installing a floating offshore structure (11) according to one of the preceding claims, by filling at least one ballast tank with air, the offshore structure (11) is brought to its location in a hydrostatically stable manner, the at least one ballast tank is filled with water and the offshore structure (11) floats on location in an operating position in a weight-stable manner.

13. Method according to claim 12,
**characterised in that** the offshore structure (11) is anchored eccentrically.

## Revendications

1. Ouvrage offshore flottant (11) avec une superstructure (2) et une fondation (1) avec un corps de base cohérent (8) avec au moins un réservoir de lestage
et avec des pieds d'appui (4a, 4b, 5a, 5b, 6a, 6b) qui partent du corps de base qui mènent à une pièce de transition (3) sur laquelle est placée la superstructure (2) et l'ouvrage offshore flottant (11) flotte de manière stable en termes de poids dans une position de fonctionnement, cependant que dans la position de fonctionnement un centre de masse (M) est placé en dessous d'un centre de gravité de flottabilité (A) si bien qu'il se forme, lors de mouvements de basculement, un bras de levier redresseur qui génère une force de rappel qui replace l'ouvrage offshore flottant dans la position de fonctionnement et qu'il est configuré flottant librement,
**caractérisé en ce que** les pieds d'appui (4, 5, 6) comprennent au moins par sections au moins deux tubes de pieds d'appui (4a, 4b, 5a, 5b, 6a, 6b) qui s'étendent parallèlement l'un à côté de l'autre.

2. . Ouvrage offshore flottant selon la revendication 1,
**caractérisé en ce que** toutes les distances entre des tubes de pieds d'appui (4a, 4b, 5a, 5b, 6a, 6b) d'un pied d'appui (4, 5, 6) sont plus petits que toutes les distances entre des tubes de pieds d'appui (4a, 4b, 5a, 5b, 6a, 6b) de différents pieds d'appui (4, 5, 6).

3. . Ouvrage offshore flottant selon l'une des revendications précédentes,
**caractérisé en ce qu'**au moins l'un des pieds d'appui (4, 5, 6) présente par sections un corps creux à partir d'au moins un côté duquel partent au moins deux tubes de pieds d'appui (4a, 4b, 5a, 5b, 6a, 6b) qui s'étendent l'un à côté de l'autre.

4. . Ouvrage offshore flottant selon l'une des revendications précédentes,
**caractérisé en ce que** les au moins deux tubes de pieds d'appui (4a, 4b, 5a, 5b, 6a, 6b) qui s'étendent l'un à côté de l'autre sont reliés l'un à l'autre de manière rigide par des jonctions obliques (7).

5. . Ouvrage offshore flottant selon l'une des revendications précédentes,
**caractérisé en ce que** les jonctions (7) sont configurées comme des tubes de liaison.

6. . Ouvrage offshore flottant selon l'une des revendications précédentes,
**caractérisé en ce que** le corps de base (8) présente dans une vue de dessus une périphérie extérieure polygonale aux coins de laquelle les pieds d'appui (4, 5, 6) sont montés.

7. . Ouvrage offshore flottant selon l'une des revendications précédentes,
**caractérisé en ce que** le corps de base (8) est configuré en triangle dans une vue de dessus le long de la périphérie extérieure et les coins dans la vue de dessus sont élargis par des protubérances (9).

8. . Ouvrage offshore flottant selon l'une des revendications précédentes,
**caractérisé en ce que** le corps de base (8) présente dans la vue de dessus un passage central.

9. . Ouvrage offshore flottant selon l'une des revendications précédentes,
**caractérisé en ce que** la superstructure est configurée comme une éolienne ou une sous-station.

10. . Ouvrage offshore flottant selon l'une des revendications précédentes,
**caractérisé en ce qu'**une corde d'ancrage lâche part de chaque coin.

11. . Ouvrage offshore flottant selon l'une des revendications précédentes,
**caractérisé en ce que** les cordes d'ancrage partent d'un point de fixation sur le corps de base (8) qui est situé excentré par rapport à une tour de l'éolienne et permettent un autoredressement de l'ouvrage offshore flottant (11) dans le vent.

12. . Procédé pour l'installation d'un ouvrage offshore flottant (11) selon l'une des revendications précédentes,
le au moins un réservoir de lestage étant rempli avec de l'air,
l'ouvrage offshore flottant (11) étant amené hydrostatiquement stable sur le site,
le au moins un réservoir de lestage étant rempli d'eau et l'ouvrage offshore flottant (11) flottant sur le site de manière stable en termes de poids dans une position de fonctionnement.

13. . Procédé selon la revendication 12,
**caractérisé en ce que** l'ouvrage offshore flottant (11) est ancré de manière excentrée.
